# EUROPEAN PATENT SPECIFICATION

(11) **EP 2 048 070 B1**
(45) Date of publication and mention of the grant of the patent: **10.03.2010**
(21) Application number: 08017832.0
(22) Date of filing: 10.10.2008
(51) Int. Cl.: B62J 35/00, B62K 25/28

(54) **Straddle-type vehicle**
Grätschsitz-Fahrzeug
Véhicule de type monté à califourchon

(30) Priority: 10.10.2007 JP 2007264951
(43) Date of publication of application: 15.04.2009
(73) Proprietor: Yamaha Hatsudoki Kabushiki Kaisha, Iwata-shi, Shizuoka 438-8501 (JP)
(72) Inventor: Shinsho, Masami, Iwata-shi Shizuoka-ken 438-8501 (JP); Hara, Shinya, Iwata-shi Shizuoka-ken 438-8501 (JP); Muroo, Sakio, Iwata-shi Shizuoka-ken 438-8501 (JP); Watanabe, Yuko, Iwata-shi, Shizuoka-ken 438-8501 (JP); Uemura, Keisuke, Iwata-shi, Shizuoka-ken 438-8501 (JP)
(74) Representative: Grünecker, Kinkeldey, Stockmair & Schwanhäusser Anwaltssozietät

(56) References cited:
- JP-A- 3 114 988
- JP-A- 2003 040 175
- JP-A- 2005 319 865
- JP-A- 2006 327 586
- US-A1- 2007 175 682

## Description

The present invention relates to a straddle-type vehicle, a motorcycle for instance, according to the preamble of independent claim 1.

JP-A-60-94878 discloses a motorcycle in which a fuel tank is disposed above a rear arm of a vehicle frame, and a rear suspension is disposed between the rear arm and the vehicle body frame.

According to such a related art, a motorcycle has a rear suspension disposed between a fuel tank and a rear arm. Therefore, since it is necessary to avoid interference between the fuel tank and the rear suspension, a restriction exists when increasing the capacity of the fuel tank. In particular, when an exhaust chamber of an exhaust system is disposed below the rear arm, a placement position of the rear suspension cannot be lowered, thereby making it more difficult to increase the fuel tank capacity. On the other hand, if the fuel tank is expanded upward in order to increase the fuel tank capacity, it is inevitable that the seat will move upward. As a result, there exists a problem that the seat height has to be raised. The invention has been devised in consideration of the above-described circumstances.

JP 2006-327586 A refers to a motorcycle in which a rear suspension is disposed between a fuel tank and an exhaust chamber. The suspension is fixed on the one side to a rear arm and on the other side to a frame of the motorcycle. In the region of the rear arm, the suspension is linked to a bracket which is then obviously joined with a rear arm. The rear arm consists of two separate swing arms, each attached to a swing arm.

A motorcycle is also described in JP 03-114988 A which has a damper disposed between the fuel tank and a capacity chamber. The damper or the rear suspension, respectively, is situated between two of the paths of a rear arm, in particular a right arm and a left arm. The rear arm suspension comprises a cushion unit configured to generate a damping force. The rear suspension extends through an opening disposed in the rear arm.

JP 2005-319865 A refers to a suspension which is joined over a connecting piece with the rear arm. This portion, to which the connecting piece is attached in the region of the rear arm, is disposed in a vehicle width direction behind the suspension.

It is an objective of the present invention to provide a straddle-type vehicle which allows an increase in the capacity of a fuel tank while avoiding an increase in the height of the seat.

According to the present invention, said objective is solved by a straddle-type vehicle with the features of claim 1. Such a vehicle comprises a vehicle body frame with a fuel tank attached thereto; an engine connected to an exhaust system having a capacity chamber; and a swingable rear arm with a rear suspension configured to buffer a load applied to the rear arm, wherein at least a part of the rear suspension, when viewed from a side of the straddle-type vehicle, is disposed between the capacity chamber and the fuel tank such that at least a part of the rear suspension overlaps with the rear arm, the rear suspension comprises a cushion unit configured to generate a damping force and the rear arm comprises an opening through which the rear suspension extends, and a support boss portion, wherein the fuel tank is disposed below a main seat and a lower end of a piston rod of the cushion unit is connected to said support boss portion which is formed below a rear edge of said opening.

Accordingly, a space required to allow the rear arm to swing upward and downward can be provided between the fuel tank and the exhaust system. Furthermore, the rear suspension can be located in the aforementioned space and also at least a part of the rear suspension overlaps with the rear arm in a vehicle side view. As a result, the rear suspension can be positioned while utilizing the space that allows the rear arm to swing upward and downward. In addition, a fuel tank capacity can be provided while avoiding an increase in the seat height.

Preferably, the fuel tank is disposed above the rear arm, and/or the capacity chamber is disposed below the rear arm.

Further, preferably the rear arm is swingably supported in vehicle moving direction rearward of the engine, said engine being attached to the vehicle body frame.

Still further, preferably the exhaust system further includes an exhaust pipe that is connected to the engine and extends in vehicle moving direction rearward, and the capacity chamber is connected to the exhaust pipe.

Yet further still, preferably the cushion unit is disposed between the capacity chamber and the fuel tank such that at least a part of the cushion unit overlaps with the rear arm, when viewed from the side of the straddle-type vehicle.

Preferably, the rear suspension comprises a link mechanism configured to change a load applied to the cushion unit and the link mechanism is located between the fuel tank and the rear arm, when viewed from the side of the straddle-type vehicle.

Further, preferably the cushion unit is arranged in such a manner as to intersect with the rear arm when viewed from the side of the straddle-type vehicle.

Still further, preferably the cushion unit is disposed in an inclined state such that the greater part of the cushion unit overlaps with the rear arm when viewed from the side of the straddle-type vehicle.

Yet further still, preferably a bottom wall of the fuel tank is provided with a recessed portion that is recessed upward and a part of a link mechanism of the rear suspension is located within the recessed portion.

According to a preferred embodiment, the recessed portion includes a first side wall portion located on one side in a vehicle width direction, a second side wall portion located on the other side, and a bottom wall portion that connects the first and second side wall portions, and a height dimension from the bottom wall portion to the first side wall portion is smaller than a height dimension from the bottom wall portion to the second side wall portion.

Preferably, the rear arm includes a first arm main body that is located on one side in a vehicle width direction and houses a rear wheel driving shaft, and a second arm main body which is located on the other side in the vehicle width direction, and the first side wall portion is located on the first arm main body side in the vehicle width direction and the second side wall portion is located on the second arm main body side in the vehicle width direction.

Further, preferably the first arm main body and the second arm main body have a cylindrical body structure with a substantially rectangular cross section, wherein a width dimension of the first arm main body is larger than a width dimension of the second arm main body.

Still further, preferably the recessed portion in the vehicle width direction is offset from a centerline towards the first side wall portion only by a certain dimension.

Yet further still, preferably a dimension of the first side wall portion in the vehicle width direction is smaller than a dimension of the second side wall portion in the vehicle width direction.

Further, preferably the rear arm comprises an opening through which the cushion unit, extends.

In the following, the present invention is explained in greater detail by means of embodiments thereof in conjunction with the accompanying drawings, wherein:
- FIG. 1: is a left side view of a motorcycle of an embodiment;
- FIG. 2: is a left side view of a rear suspension portion of the motorcycle;
- FIG. 3: is a perspective view from the front diagonal left of the rear suspension;
- FIG. 4: is a plan view of the rear suspension;
- FIG. 5: is an expanded plan view of a cross-section of the rear suspension;
- FIG. 6: is left side view of a fuel tank portion of the motorcycle;
- FIG. 7: is a left side view illustrating a rear portion of the fuel tank;
- FIG. 8: is a plan view of the fuel tank portion;
- FIG. 9: is a cross-sectional view (a cross-sectional view taken along a line IX-IX in FIG. 6) of an installation portion of the fuel tank;
- FIG. 10: is a cross-sectional view (a cross-sectional view taken along a line X-X in FIG. 6) of the installation portion of the fuel tank;
- FIG. 11: is a plan view of a rear flasher unit; and
- FIG. 12: is a left side view of the rear flasher unit.

Among others, the following reference signs are used in the figures:
- 1: Motorcycle (Straddle-Type Vehicle)
- 2: Vehicle Body Frame
- 8: Engine
- 13: Exhaust System
- 13a: Exhaust Pipe
- 13b: Exhaust Chamber (Capacity Chamber)
- 17: Rear Arm
- 17a: Left Arm Main Body (First Arm Main Body)
- 17b: Right Arm Main Body (Second Arm Main Body)
- 18a: Rear Wheel Driving Shaft
- 19: Rear Suspension
- 20: Fuel Tank
- 20e: Bottom Wall
- 20f: Recessed Portion
- 20f': Bottom Wall Portion
- 20n: Left Side Wall (First Side Wall Portion)
- 20p: Right Side Wall (Second Side Wall Portion)
- 37: Cushion Unit
- 38: Link Mechanism
- A: Centerline (extending in length direction of the vehicle)
- C: Offset Dimension
- d1: Diameter Of Left Arm Main Body
- d2: Diameter Of Right Arm Main Body
- h1: Dimension Of Left Side Wall From Bottom Wall Portion
- h2: Dimension Of Right Side Wall From Bottom Wall Portion
- W1: Dimension Of Left Side Wall In Vehicle Width Direction
- W2: Dimension Of Right Side Wall In Vehicle Width Direction

Hereinafter, an embodiment will be described with reference to the appended drawings.

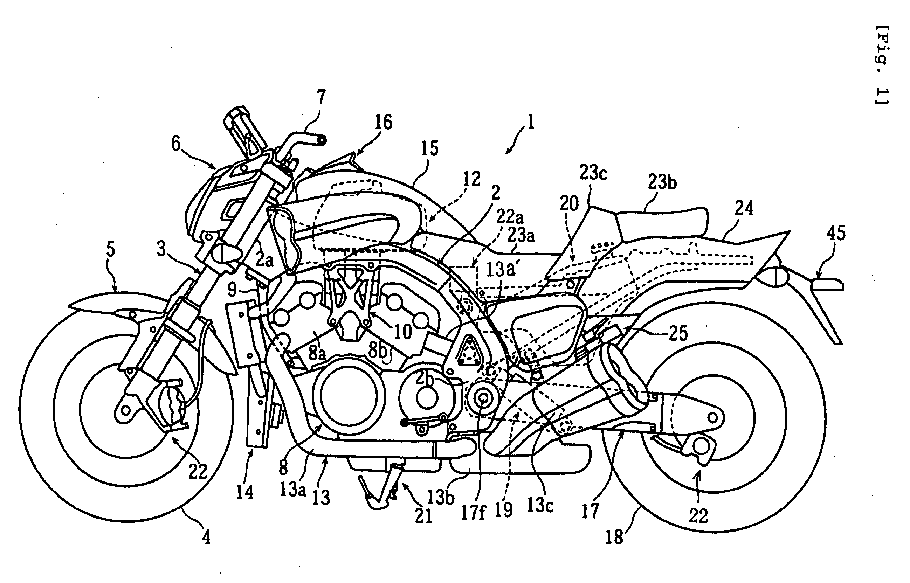

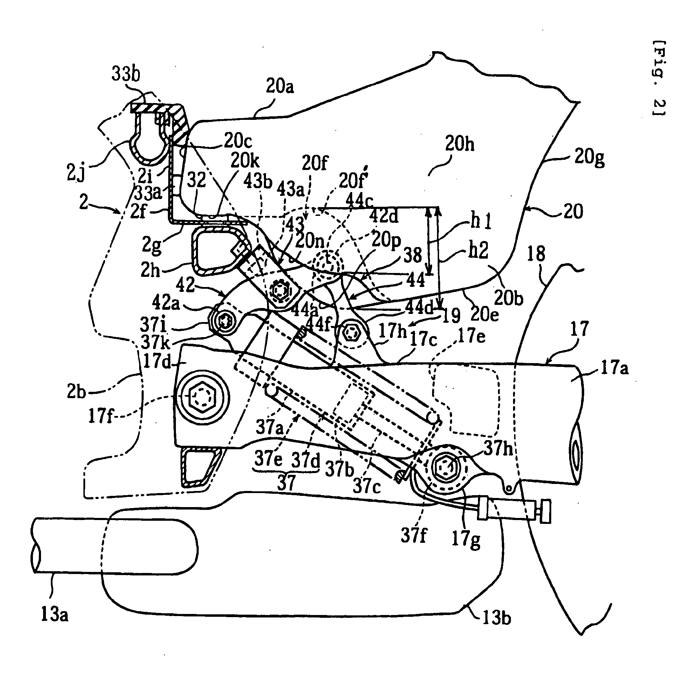

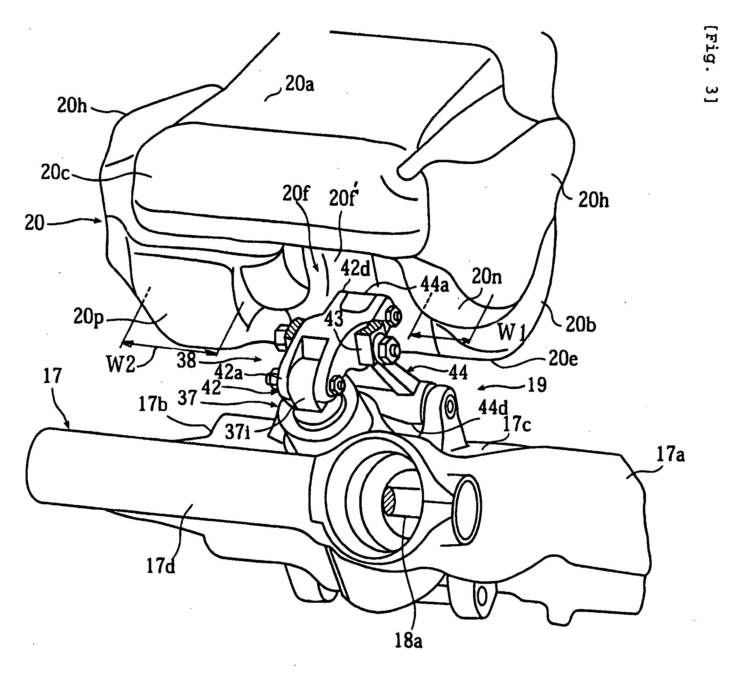

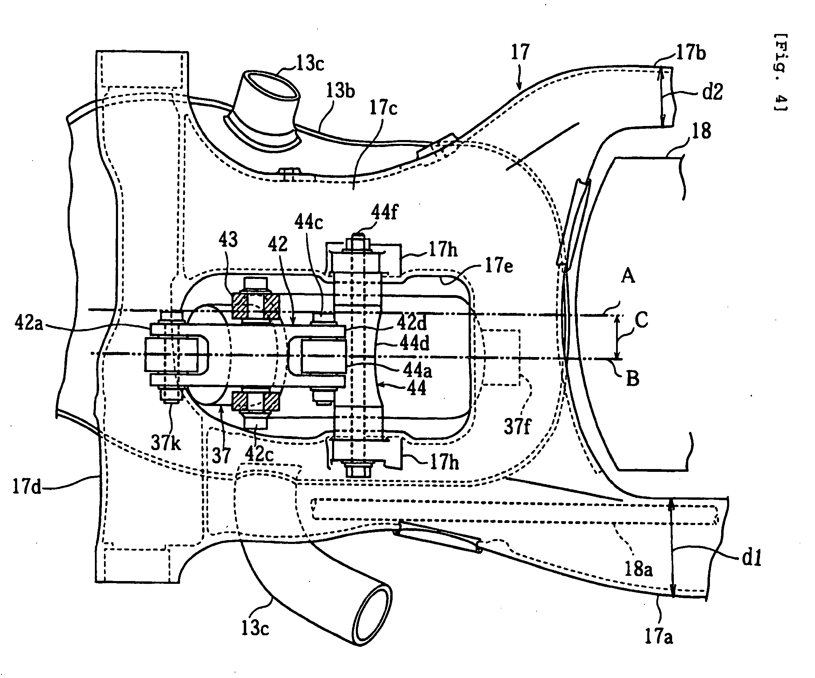

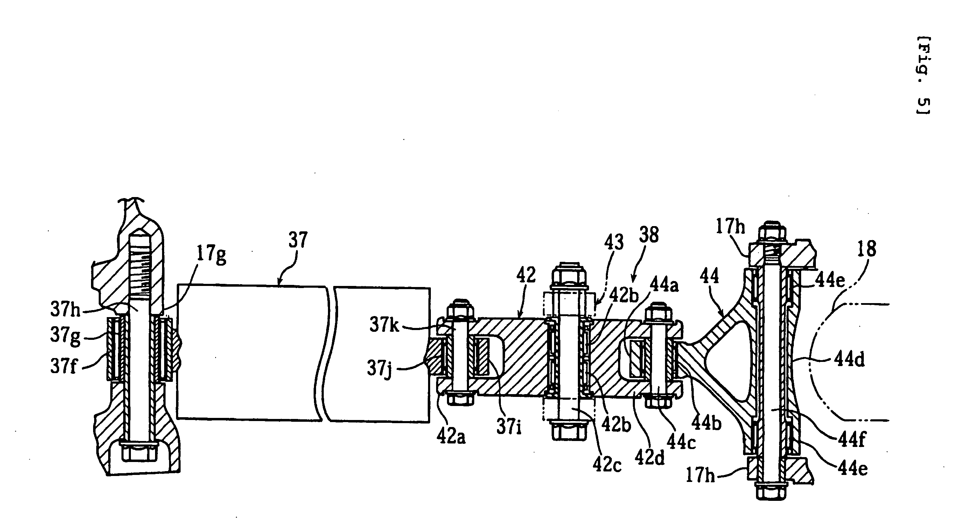

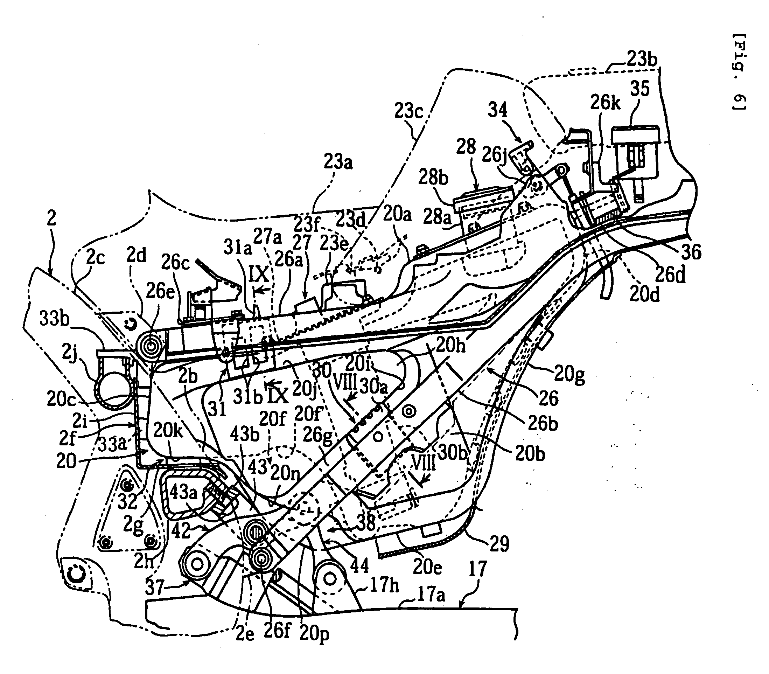

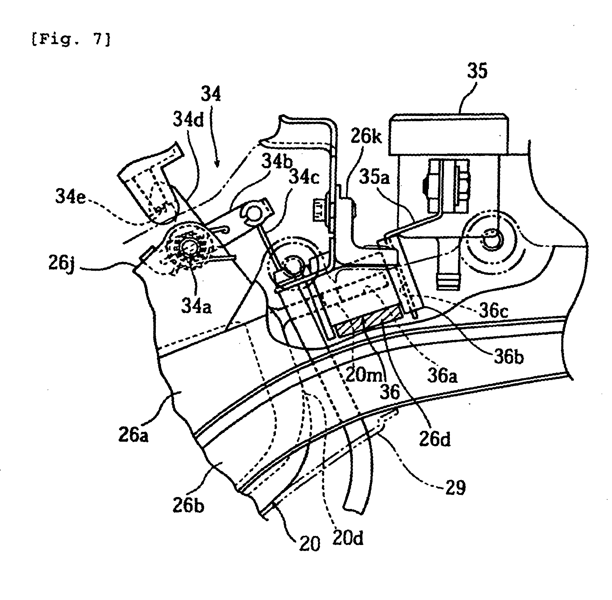

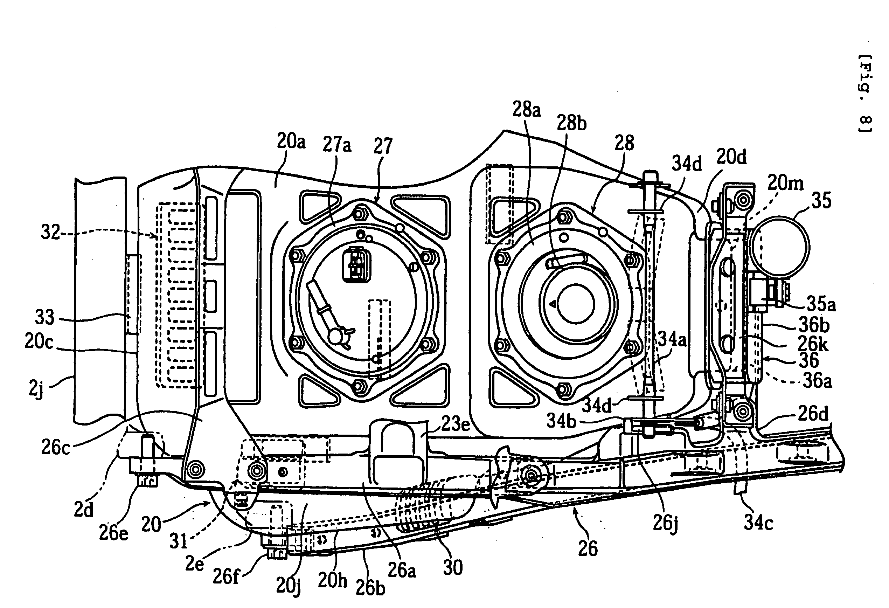

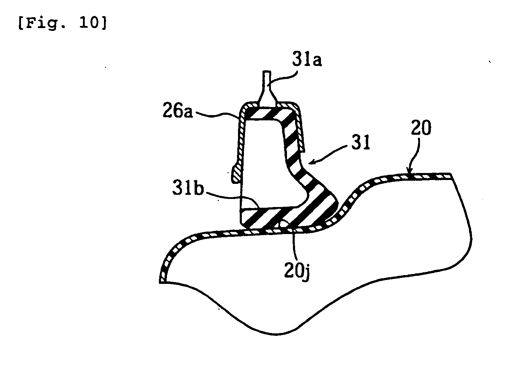

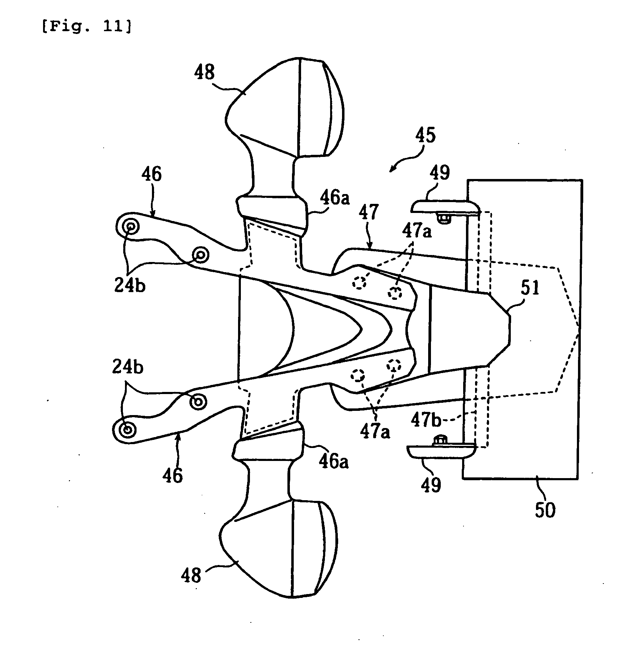

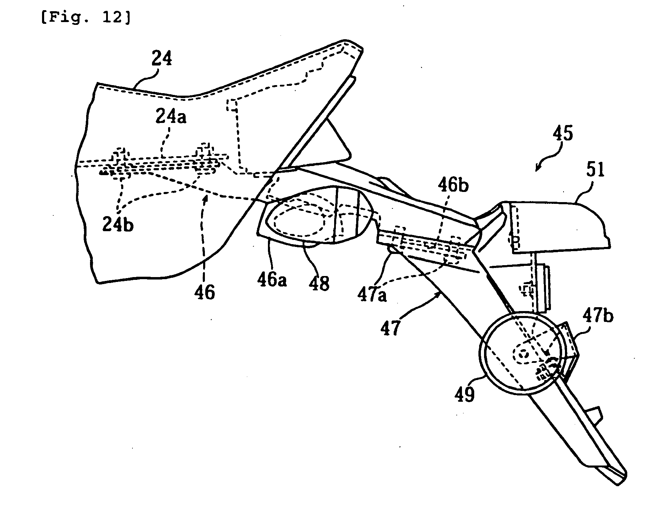

FIGS. 1 to 12 illustrate a straddle-type vehicle, such as a motorcycle. In general, a straddle-type vehicle has a body frame and a seat on which a driver can be seated straddling the body frame when being seated. Note that, the terms front, rear, left, and right as used in this embodiment indicate the front, rear, left, and right when viewed from a rider seated on a seat.

In the figures, the reference numeral 1 indicates a motorcycle which is generally structured as below. A head pipe 2a at the front end portion of a vehicle body frame 2 supports a front fork 3 in such a manner that the front fork 3 is steerable to the left and right. A front wheel 4 is pivotally supported at a lower end portion of the front fork 3 and the front wheel 4 is covered by a front fender 5 which is installed at the lower portion of the front fork 3. Moreover, the upper portion of the front fork 3 is provided with a headlight unit 6, and a steering control wheel 7 is fixed to the upper end portion of the front fork 3.

The vehicle body frame 2 has an engine unit 8 that is supported by being suspended by a front suspension bracket 9, a center suspension bracket 10, and a rear arm bracket portion 2b of the vehicle body frame 2. The engine unit 8 is connected to an intake system 12 and an exhaust system 13. Furthermore, a radiator unit 14 is provided at the front of the engine unit 8. The intake system 12 is covered, from the top thereof, by a frame cover 15 which is provided with an indicator 16 that indicates a vehicle condition.

Moreover, a lower portion of a left side wall of the engine unit 8 is provided with a side stand unit 21 that allows the motorcycle 1 to stand slightly tilted to the left.

In addition, a rear arm 17 is supported by the rear arm bracket portion 2b of the vehicle body frame 2 in such a manner that it can swing upward and downward. A rear wheel 18 is supported by a rear end portion of the rear arm 17. Hydraulic braking systems 22 and 22 are used to brake the rear wheel 18 and the front wheel 4.

A rear suspension 19 is disposed between the rear arm 17 and the rear arm bracket portion 2b. The rear suspension 19 is provided with a remote control-type operation characteristics adjuster 25.

A fuel tank 20 is disposed on top of the rear suspension 19. A hydraulic control unit 22a of the braking system 22 is disposed in front of and diagonally upward from the fuel tank 20. A main seat 23a is disposed in such a manner as to be located above the hydraulic control unit 22a and the fuel tank 20. A tandem seat 23b is disposed in such a manner as to connect with the main seat 23a. Note that a reference numeral 23c indicates a backrest for supporting a lower back of a rider. Furthermore, a rear fender 24 which covers the rear wheel 18 from the top is disposed under the tandem seat 23b.

The engine unit 8 is a water-cooled 4-stroke V-type 4-cylinder type engine that is structured such that left and right front cylinders 8a and left and right rear cylinders 8b form a V-bank in a longitudinal direction.

The exhaust system 13 includes two exhaust pipes 13a that are connected with the front cylinders 8a of the engine unit 8 and extend to the rear, and two exhaust pipes 13a' that are connected with the rear cylinders 8b. In addition, the exhaust system 13 has an exhaust chamber (capacity chamber) 13b that is shared by all cylinders and is connected with the exhaust pipes 13a and 13a', and left and right mufflers 13c that are connected with the left and right side walls of the exhaust chamber 13b and extend to the rear and diagonally upward on the left side and right side of the vehicle, respectively. The exhaust chamber 13b is disposed under the front portion of the rear arm 17 as well as in front of the rear wheel 18.

The rear arm 17 includes a left arm main body (a first arm main body) 17a located to the left side (one side) in a vehicle width direction, and a right arm main body (a second arm main body) 17b located to the right side (the other side). In addition, the rear arm 17 has a connecting portion 17c for connecting the arm main bodies 17a and 17b with each other at the front portions thereof, and a pivot portion 17d formed at the front end portion of the connecting portion 17c.

The left and right arm main bodies 17a and 17b each have cylindrical body structures that have a substantially rectangular cross section and they extend in the longitudinal direction of the vehicle. The left arm main body 17a is also used as a shaft case in which a rear wheel driving shaft 18a is inserted and housed. Accordingly, a width dimension d1 of the left arm main body 17a is larger than a width dimension diameter d2 of the right arm main body 17b.

The connecting portion 17c forms a flat box shape and is provided with a substantially rectangular opening 17e that passes vertically through the connecting portion 17c. The opening 17e is formed in such manner as to be offset from a vehicle centerline A towards one side (left side) of the vehicle width direction only by a dimension C. As will be described later, the opening 17e houses therein a cushion unit 37 of the rear suspension 19.

Furthermore, the pivot portion 17d has a pivot shaft 17f inserted and housed therein. The rear arm 17 is supported by the rear arm bracket portion 2b of the vehicle body frame 2 via the pivot shaft 17f of the rear arm 17 such that it can swing upward and downward.

The fuel tank 20 is disposed in such a manner as to be housed in a rear frame 26 which constitutes a part of the vehicle body frame 2. The rear frame 26 has left and right seat rails 26a and 26a which extend substantially horizontally in a longitudinal direction, and has left and right back stays 26b and 26b which are fixedly connected to the rear portions of the left and right seat rails 26a and 26a and which extend to the front and diagonally downward from the rear portions. The rear frame 26 substantially forms a Y-shape in a vehicle side view. The seat rail 26a forms a U-shape, the opening of which is facing down, in a cross-sectional view. Moreover, the back stay 26b forms a rectangular shape in the cross-sectional view.

Furthermore, respective front end portions and respective rear end portions of the left and right seat rails 26a and 26a are connected by front and rear cross members 26c and 26d, respectively, which extend in the vehicle width direction. The rear frame 26 forms a substantially rectangular frame shape in a plan view.

The front end portion of each of the seat rails 26a of the rear frame 26 is detachably connected, by a bolt 26e, with a boss portion 2d formed at the middle portion of the left and right main frames 2c and 2c that extend to the rear and diagonally downward from the head pipe 2a. In addition, the front end portion of each of the back stays 26b is detachably connected, by a bolt 26f, with a boss portion 2e formed on the rear arm bracket portion 2b. The seat rail 26a, the back stay 26b, and the rear arm bracket portion 2b form a substantially triangular opening 26g.

The fuel tank 20 is a sealed plastic container that is formed, for instance, by blow molding, and has a top wall 20a, left and right side walls 20b and 20b, a front wall 20c, a rear wall 20d, and a bottom wall 20e. A front portion of the bottom wall 20e is provided with a recessed portion 20f to avoid interference with a link mechanism 38 to be described later. Moreover, the rear wall 20d is provided with a curved portion 20g to avoid interference with the rear wheel 18. Furthermore, the back face of the curved portion 20g is provided with a cover 29 which functions as a mud guard. The cover 29 is formed in such a manner as to cover a portion of the fuel tank 20 that protrudes downward from the back stay 26b.

A fuel pump 27 is inserted and disposed at substantially a center portion of the fuel tank 20 from the top thereof. A flange portion 27a formed on a top end portion of the pump 27 is detachably fastened by a bolt via a bracket (not shown) to the top wall 20a of the fuel tank 20. Furthermore, a rear portion of the fuel tank 20 is provided with a filler port 28. The filler port 28 has a flanged filler pipe 28a that is fastened by a bolt to the top wall 20a, and a cap 28b that is installed to allow opening and closing of an upper end opening thereof.

In this case, the backrest 23c is supported about a rotational shaft 23d disposed at the front portion of the backrest 23c such that a backrest 23 can be turned to the front. Note that a reference numeral 23e is a load receiver disposed on the seat rail 26a, and is in contact with the bottom panel of the main seat 23a via a dumper 23f. Moreover, a rear end portion of the backrest 23c is provided with a lock mechanism 34. The lock mechanism 34 rotatably supports a lock shaft 34a by a support flange portion 26j that is formed on the seat rail 26a. In this case, when a lock lever 34b fixed to the lock shaft 34a is turned by a cable 34c, a latch 34d that is fixed to the lock shaft 34a latches or unlatches a lock pin 34e provided on the backrest 23c. Note that the lock shaft 34a is energized towards a locking direction, and is turned to the unlocking direction when the operation cable 34c is pulled downward.

When the lock is released and the backrest 23c is turned forward, the cap 28b is exposed upward to allow fuel filling.

The fuel tank 20 is attached to the vehicle body frame 2, and specifically within the rear frame 26 as per the following structure. The left and right side walls 20b and 20b of the fuel tank 20 are respectively provided with a protruded portion 20h. The protruded portion 20h is formed in a substantially triangular shape which corresponds to the opening 26g formed by the rear frame 26 and the rear arm bracket portion 2b. Moreover, the protruded portion 20h protrudes outward, thereby increasing the capacity of the fuel tank to the degree of protrusion.

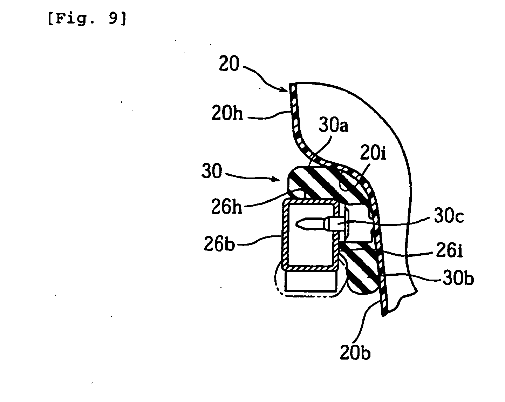

A bottom damper 30 made of an elastic member such as a rubber is disposed between the back stay 26b and a lower slant portion 20i of the protruded portion 20h. The bottom damper 30 substantially forms an L-shape in a cross-sectional view (refer to FIG. 9). In addition, a horizontal side portion 30a of the bottom damper 30 is held between the lower slant portion 20i of the protruded portion 20h and an upper face 26h of the back stay 26b. Furthermore, a vertical side portion 30b is held between the side wall 20b and an inner side wall 26i of the back stay 26b. The bottom damper 30 is fixed to the back stay 26b by a rivet 30c that is inserted through the vertical side portion 30b.

Furthermore, an upper damper 31 made of an elastic member such as a rubber is disposed between the seat rail 26a and an upper slant portion 20j of the protruded portion 20h. The upper damper 31 substantially forms a rectangular shape, and is engaged and inserted in the seat rail 26a which forms a U-shape in which the opening is facing down in a cross-sectional view. In addition, the upper damper 31 is interposed between the seat rail 26a and the upper slant portion 20j of the protruded portion 20h. The upper damper 31 is fixed to the seat rail 26a by a bullet connector 31 a that is integrally formed with the upper damper 31. In this case, a reference numeral 31 b is a recessed portion provided to reduce the mass.

Furthermore, an overhang portion 20k that extends to the front and continuously from the recessed portion 20f of the fuel tank 20 is provided with a flat damper 32 that is made of an elastic member such as a rubber. The flat damper 32 is formed in a flat plate and is fixed to a horizontal side portion 2g of a support plate 2f which has an L-shaped cross section. Moreover, the flat damper 32 is in contact with the top of a cross frame 2h and receives the weight of the fuel tank 20. The cross frame 2h is structured in a cylindrical shape that has a substantially pentagonal cross section, and connects the left and right main frames 2c and 2c with each other. In addition, a vertical-piece bracket 2i of the support plate 2f is fixed to the cross frame 2j.

Furthermore, dampers 33a and 33b made of an elastic member such as rubber are interposed between the front wall 20c of the fuel tank 20 and the vertical side portion 2i of the support plate 2f. The damper 33a is adhered to the vertical side portion 2i of the support plate 2f or the front wall 20c of the fuel tank 20. Furthermore, the damper 33b is attached to the cross frame 2j. The damper 33a avoids friction between the front wall 20c of the fuel tank 20 and the support plate 2f. Moreover, the damper 33b restricts forward movement of the fuel tank 20.

The fuel tank 20 is attached to the vehicle body frame 2 according to the following procedures. Prior to connecting the rear frame 26 to the main frame 2c, the bottom damper 30 is attached to the back stay 26b by the rivet 30c. Meanwhile, the upper damper 31 is attached to the seat rail 26a by the bullet connector 31a. Thereafter, the fuel tank 20 is inserted in the rear frame 26 from the front, and the lower slant portion 20i and the upper slant portion 20j of the protruded portion 20h of the fuel tank 20 are pressure-welded to the bottom damper 30 and the upper damper 31, respectively, to form a subassembly. The subassembly is then assembled to the rear arm brackets 2b and 2b by the bolts 26e and 26f. In this case, the overhang portion 20k of the fuel tank 20 is made to be in contact with the top of the cross frame 2h with the flat damper 32 interposed therebetween. In addition, the front wall 20c is made to be in contact with the support plate 2f with the dampers 33a and 33b interposed therebetween. The fuel tank 20 is installed within the rear frame 26 in a set position with respect to longitudinal, horizontal, and vertical directions by the dampers 32, 33a and 33b and a damper to be described later.

Moreover, the rear end portion of the fuel tank 20 is attached with a reservoir tank 35 as per the following structure. The upper portion of the rear wall 20d of the fuel tank 20 has a flange portion 20m integrally formed therewith in such a manner as to protrude to the rear. The flange portion 20m is engaged with a slit portion 36a of a support damper 36 made of an elastic member such as a rubber. The support damper 36 is placed on the cross member 26d and positioned and fixed thereto by being pressed by a cross plate 26k. Note that the cross plate 26k is fastened to the cross member 26d by a bolt. Furthermore, a flange portion 36b formed at the rear end portion of the support damper 36 is provided with a slit 36c in which a bracket 35a is inserted and engaged. The reservoir tank 35 is fastened to the bracket 35a by a bolt.

Note that, although not shown, the reservoir tank 35 is connected to a master cylinder which generates a hydraulic pressure to brake the rear wheel, and supplies the operating oil to the master cylinder.

As described above, since the reservoir tank 35 is attached to the rear wall 20d of the fuel tank 20 via the damper 36, vibration transferred from the vehicle body to the reservoir tank 35 can be restricted. Moreover, since the reservoir tank 35 is covered by the tandem seat 23b from the top, inadvertent operation from outside can be avoided.

The rear suspension 19 includes the cushion unit 37 and the link mechanism 38. The cushion unit 37 is located such that a shaft center B thereof coincides with the center of the opening 17e and passes through the opening 17e to the rear and slants downward from the side of the rear arm bracket portion 2b. When viewed from the side of the vehicle, the cushion unit 37 intersects with the rear arm 17 and the greater part of the cushion unit 37 overlaps with the rear arm 17.

The cushion unit 37 has a cushion main body 37d that is structured such that a piston 37b is slidably inserted and housed in the cylinder 37a and a piston rod 37c connected to the piston 37b protrudes outward. Moreover, the cushion unit 37 has a coiled cushioning spring 37e disposed in such a manner as to surround the cushion main body 37d.

The cushioning spring 37e absorbs an impact load from the rear wheel 18. In addition, the cushion main body 37d generates a pressure damping force during compression as well as extension damping force during extension in order to absorb the impact load. Furthermore, the cushion main body 37d has a function to constrict extension and contraction movements of the cushioning spring 37e.

Furthermore, the cushioning unit 37 is connected with the operation characteristics adjuster 25 which adjusts the operation characteristics of the cushion unit 37 by remote control. The adjuster 25 includes a pressure damping force adjuster for adjusting the pressure damping force generated by the cushion main body 37d, an extension damping force adjuster for adjusting the extension damping force generated by the cushion main body 37d, and an initial adjuster for adjusting an initial value of a spring force of the cushioning spring 37e.

A tip end boss portion 37f of the piston rod 37c of the cushion main body 37d is connected with a support boss portion 17g that is formed below the rear edge of the opening 17e by a support shaft 37h via a bearing 37g.

Furthermore, a base end boss portion 37i of the cylinder 37a is connected with a forked tip end boss portion 42a of a relay arm 42 of the link mechanism 38 by a connecting pin 37k via a bearing 37j. Moreover, a longitudinal center portion of the relay arm 42 is supported in a swingable manner to a bracket 43 by a support shaft 42c via a bearing 42b. The bracket 43 forms a U-shape and a base side portion 43b thereof is fixed to the cross frame 2h by a bolt 43a.

Furthermore, a forked base end boss portion 42d of the relay arm 42 is connected with a tip end boss portion 44a of an arm 44 by a connecting pin 44c via a bearing 44b. The arm 44 has a substantially triangular shape and widens as it extends downward in the vehicle width direction from the tip end boss portion 44a. A base end boss portion 44d formed on the base side portion of the arm 44 is supported by a support boss portion 17h formed on the rear arm 17 by a support shaft 44f via left and right bearings 44e.

The front portion of the bottom wall 20e of the fuel tank 20 is provided with a recessed portion 20f to avoid interference with the link mechanism 38. The recessed portion 20f is provided in such a manner as to be recessed upward and a vehicle width direction centerline B of the recessed portion 20f is offset to the left from the vehicle centerline A only by a dimension C. A part of the link mechanism 38 is located in the recessed portion 20f.

The recessed portion 20f is structured by connecting a left side wall (a first side wall portion) 20n and a right side wall (a second side wall portion) 20p that are located on the left and right (one side and the other), by a bottom wall portion 20f'. According to the offset position of the recessed portion 20f, a dimension W1 of the left side wall 20n in the vehicle width direction is set smaller than a dimension W2 of the right side wall 20p in the vehicle width direction. Furthermore, the lower edge of the left side wall 20n is located slightly above the lower edge of the right side wall 20p. Accordingly, a dimension h1 from the bottom wall 20f to the left side wall 20n is set smaller than a dimension h2 from the bottom wall 20f' to the right side wall 20p.

The rear end portion of the rear fender 24 is provided with a rear flasher unit 45. The rear flasher unit 45 includes a pair of left and right metal brackets 46 and 46 that are fastened to a bottom wall 24a of the rear fender 24 by a bolt 24b. Also, the rear flasher unit 45 has a mud guard 47 that is disposed under the left and right brackets 46 and 46 in such a manner as to bridge both brackets.

The bracket 46 is made of, for example, an aluminum alloy that has been processed, by buffing or the like, to give it a decorated look. A boss portion 46a is integrated with the bracket 46 in such a manner as to protrude outward in the vehicle width direction. The left and right boss portions 46a and 46a are attached with left and right rear flashers 48 and 48.

The mud guard 47 extends continuously from the rear fender 24 in a downward slant to the rear to cover the rear edge of the rear wheel 18 from the top. The mud guard 47 is fastened by a bolt 47a to a rear end bottom face 46b of the left and right brackets 46. Left and right reflectors 49 and 49 are attached to the mud guard 46 via a bracket 47b which extends outward in the vehicle width direction. Moreover, the mud guard 46 is also attached with a license plate 50. Furthermore, a license plate lamp 51 for illuminating the license plate 50 is attached in a continuous manner to the rear end of the bracket 46.

As described above, in the aforementioned embodiment, the rear suspension 19 in a vehicle side view is located between the exhaust chamber 13b and the fuel tank 20. As a result, the rear suspension 19 can be disposed while utilizing a space between the exhaust chamber 13b and the fuel tank 20, more specifically an installation space for the rear arm 17 that swings upward and downward. In this case, the link mechanism 38 is placed between the fuel tank 20 and the rear arm 17, and the cushion unit 37 is disposed in such a manner as to intersect with the rear arm 17. Thus, an increase in the seat height can be avoided while increasing the fuel tank capacity.

In addition, the cushion unit 37 in the vehicle side view is located in the opening 17e while being tilted to the front such that the greater part of the cushion unit 37 overlaps with the rear arm 17. Accordingly, the fuel tank capacity can be increased while inhibiting increases in the seat height.

Furthermore, the bottom wall 20e of the fuel tank 20 is provided with the recessed portion 20f that is recessed upward. Also, part of the link mechanism 38 of the rear suspension 19 is located in the recessed portion 20f, and this allows increases in the seat height to be more effectively inhibited.

Moreover, to form the recessed portion 20f, the recessed portion 20f is offset to the left from the vehicle centerline A, and the height dimension h1 of the left side wall 20n is set smaller than the height dimension h2 of the right side wall 20p. In addition, the dimension W2 of the right side wall 20p in the width direction is set larger than the dimension W1 of the left side wall 20n in the width direction. As a result, maintenance of the link mechanism 38 can be conducted from one side (left side) of the vehicle, and the fuel tank capacity can be increased. That is, the lower the height of the left side wall 20n, the easier the inspection and maintenance of the link mechanism 38 from the left side of the vehicle becomes. On top of that, since both the vehicle width dimension and height dimension of the right side wall 20p are set large, tank capacity can be further gained accordingly. Furthermore, the left arm main body 17a of the rear arm 17 which has a large diameter d1 is located at the left side in the vehicle width direction. Thus, by reducing the height dimension of the left side wall 20n, a necessary clearance can be provided between the left arm main body 17a having the larger diameter and the left side wall 20n.

Moreover, in the embodiment as explained above, a description was given of a case in which the motorcycle has the rear suspension that includes the cushion unit and the link mechanism. However, the invention can also be applied to a rear suspension that has a cushion unit only and does not have a link mechanism.

Furthermore, the aforementioned embodiment described the case of the motorcycle. However, the teaching above can also be applied to other vehicles such as a straddle-type four wheeled vehicle for use on rough roads.

## Claims

1. Straddle-type vehicle comprising:
a vehicle body frame (2) with a fuel tank (20) attached thereto;
an engine (8) connected to an exhaust system (13) having a capacity chamber (13b); and
a swingable rear arm (17) with a rear suspension (19) configured to buffer a load applied to the rear arm (17), wherein at least a part of the rear suspension (19), when viewed from a side of the straddle-type vehicle, is disposed between the capacity chamber (13b) and the fuel tank (20) such that at least a part of the rear suspension (19) overlaps with the rear arm (17),
the rear suspension (19) comprises a cushion unit (37) configured to generate a damping force and the rear arm (17) comprises an opening (17e) through which the rear suspension (19) extends, and a support boss portion (17g)
**characterized in that**
the fuel tank (20) is disposed below a main seat (23a) and a lower end of a piston rod (37c) of the cushion unit (37) is connected to said support boss portion (17g) which is formed below a rear edge of said opening (17e).

2. Straddle-type vehicle according to claim 1, **characterized in that** the fuel tank (20) is disposed above the rear arm (17), and/or the capacity chamber (13b) is disposed below the rear arm (17).

3. Straddle-type vehicle according to claim 1 or 2, **characterized in that** the rear arm (17) is swingably supported in vehicle moving direction rearward of the engine (8), said engine (8) being attached to the vehicle body frame (2).

4. Straddle-type vehicle according to one of claim 1 to 3, **characterized in that** the exhaust system (13) further includes an exhaust pipe (13a) that is connected to the engine (8) and extends in vehicle moving direction rearward, and the capacity chamber (13b) is connected to the exhaust pipe (13a).

5. Straddle-type vehicle according to one of claims 1 to 4, **characterized in that** the cushion unit (37) is disposed between the capacity chamber (13b) and the fuel tank (20) such that at least a part of the cushion unit (37) overlaps with the rear arm (17), when viewed from the side of the straddle-type vehicle.

6. Straddle-type vehicle according to claim 5, **characterized in that** the rear suspension (19) comprises a link mechanism (38) configured to change a load applied to the cushion unit (37) and the link mechanism (38) is located between the fuel tank (20) and the rear arm (17), when viewed from the side of the straddle-type vehicle.

7. Straddle-type vehicle according to claim 5 or 6, **characterized in that** the cushion unit (37) is arranged in such a manner as to intersect with the rear arm (17) when viewed from the side of the straddle-type vehicle.

8. Straddle-type vehicle according to one of claims 5 to 7, **characterized in that** the cushion unit (37) is disposed in an inclined state such that the greater part of the cushion unit (37) overlaps with the rear arm (17) when viewed from the side of the straddle-type vehicle.

9. Straddle-type vehicle according to one of claims 1 to 8, **characterized in that** a bottom wall (20e) of the fuel tank (20) is provided with a recessed portion (20f) that is recessed upward and a part of a link mechanism (38) of the rear suspension (19) is located within the recessed portion (20f).

10. Straddle-type vehicle according to claim 9, **characterized in that** the recessed portion (20f) includes a first side wall portion (20n) located on one side in a vehicle width direction, a second side wall portion (20p) located on the other side, and a bottom wall portion (20f') that connects the first and second side wall portions (20n,20p), and a height dimension (h1) from the bottom wall portion (20f) to the first side wall portion (20n) is smaller than a height dimension (h2) from the bottom wall portion (20f) to the second side wall portion (20p).

11. Straddle-type vehicle according to one of claims 1 to 10, **characterized in that** the rear arm (17) includes a first arm main body (17a) that is located on one side in a vehicle width direction and houses a rear wheel driving shaft (18a), and a second arm main body (17b) which is located on the other side in the vehicle width direction, and the first side wall portion (20n) is located on the first arm main body (17a) side in the vehicle width direction and the second side wall portion (20p) is located on the second arm main body (17b) side in the vehicle width direction.

12. Straddle-type vehicle according to claim 11, **characterized in that** the first arm main body (17a) and the second arm main body (17b) have a cylindrical body structure with a substantially rectangular cross section, wherein a width dimension of the first arm main body (17a) is larger than a width dimension of the second arm main body (17b).

13. Straddle-type vehicle according to one of claims 10 to 12, **characterized in that** the recessed portion (20f) in the vehicle width direction is offset from a centerline (A) towards the first side wall portion (20n) only by a certain dimension (C).

14. Straddle-type vehicle according to one of claims 10 to 13, **characterized in that** a dimension of the first side wall portion (20n) in the vehicle width direction is smaller than a dimension of the second side wall portion (20p) in the vehicle width direction.

15. Straddle-type vehicle according to one of claims 1 to 14, **characterized in that** the cushion unit (37) of the rear suspension (19) extends through the opening (17e).

## Patentansprüche

1. Fahrzeug vom Grätschsitz- Typ, aufweisend:
einen Fahrzeugkarosserierahmen (2) mit einem mit diesem verbundenen Kraftstofftank (20);
eine Brennkraftmaschine (8), verbunden mit einem Abgassystem (13), das eine Hohlraumkammer (13b) hat; und
einen schwingbaren Hinterarm (17) mit einer hinteren Aufhängung (19), konfiguriert ein Last, aufgebracht auf den Hinterarm (17), abzupuffern, wobei zumindest ein Teil der hinteren Aufhängung (19), wenn von einer Seite des Fahrzeuges vom Grätschsitz- Typ gesehen, zwischen der Hohlraumkammer (13b) und dem Kraftstofftank (20) derart angeordnet ist, dass zumindest ein Teil der hinteren Aufhängung (19) mit dem Hinterarm (17) überlappt,
wobei die hintere Aufhängung (19) eine Kisseneinheit (37) aufweist, konfiguriert, eine Dämpfungskraft zu erzeugen, und der Hinterarm (17) eine Öffnung (17e) aufweist, durch die sich die hintere Aufhängung (19) erstreckt, und einen Lagernabenabschnitt (17g),
**dadurch gekennzeichnet, dass**
der Kraftstofftank (20) unterhalb des Hauptsitzes (23a) angeordnet ist und ein unteres Ende einer Kolbenstange (37c) der Kisseneinheit (37) mit dem Lagernabenabschnitt (17g) verbunden ist, der unter einer hinteren Kante der Öffnung (17e) gebildet ist.

2. Fahrzeug vom Grätschsitz- Typ nach Anspruch 1, **dadurch gekennzeichnet, dass** der Kraftstofftank (20) oberhalb des Hinterarm (17) angeordnet ist und/oder die Hohlraumkammer (13b) unterhalb dem Hinterarms (17) angeordnet ist.

3. Fahrzeug vom Grätschsitz- Typ nach Anspruch 1 oder 2, **dadurch gekennzeichnet, dass** der Hinterarm (17) in Richtung der Fahrzeugbewegung hinter der Brennkraftmaschine (8), die mit dem Fahrzeugkarosserierahmen (2) verbunden ist, schwingbar gelagert ist.

4. Fahrzeug vom Grätschsitz- Typ nach einem der Ansprüche 1 bis 3, **dadurch gekennzeichnet, dass** das Abgassystem (13) außerdem ein Abgasrohr (13a) enthält, das mit der Brennkraftmaschine (8) verbunden ist und sich in der Richtung der Fahrzeugbewegung nach hinten erstreckt, und die Hohlraumkammer (13b) mit dem Abgasrohr (13a) verbunden ist.

5. Fahrzeug vom Grätschsitz- Typ nach einem der Ansprüche 1 bis 4, **dadurch gekennzeichnet, dass** die Kisseneinheit (37) zwischen der Hohlraumkammer (13b) und dem Kraftstofftank (20) derart angeordnet ist, dass zumindest ein Teil der Kisseneinheit (37) mit dem Hinterarm (17) überlappt, wenn von der Seite des Fahrzeuges vom Grätschsitz- Typ gesehen.

6. Fahrzeug vom Grätschsitz- Typ nach Anspruch 5, **dadurch gekennzeichnet, dass** die hintere Aufhängung (19) eine Verbindungsvorrichtung (38) aufweist, konfiguriert, eine Last, aufgebracht auf die Kisseneinheit (37), zu ändern und die Verbindungsvorrichtung (38) zwischen dem Kraftstofftank (20) und dem Hinterarm (17), wenn von der Seite des Fahrzeuges vom Grätschsitz- Typ gesehen, angeordnet ist.

7. Fahrzeug vom Grätschsitz- Typ nach Anspruch 5 oder 6, **dadurch gekennzeichnet, dass** die Kisseneinheit (37) in solch einer Weise angeordnet ist, dass sie den Hinterarm (17) schneidet, wenn von der Seite des Fahrzeuges vom Grätschsitz-Typ gesehen.

8. Fahrzeug vom Grätschsitz- Typ nach einem der Ansprüche 5 bis 7, **dadurch gekennzeichnet, dass** die Kisseneinheit (37) in einem geneigten Zustand derart angeordnet ist, dass der größere Teil der Kisseneinheit (37) mit dem Hinterarm (17) überlappt, wenn von der Seite des Fahrzeuges vom Grätschsitz- Typ gesehen.

9. Fahrzeug vom Grätschsitz- Typ nach einem der Ansprüche 1 bis 8, **dadurch gekennzeichnet, dass** eine Bodenwand (20e) des Kraftstofftanks (20) mit einem ausgesparten Abschnitt (20f) versehen ist, der nach oben ausgespart ist und ein Teil eines Verbindungsvorrichtung (38) der hinteren Aufhängung (19) innerhalb des ausgesparten Abschnittes (20f) angeordnet ist.

10. Fahrzeug vom Grätschsitz- Typ nach Anspruch 9, **dadurch gekennzeichnet, dass** der ausgesparte Abschnitt (20f) einen ersten Seitenwandabschnitt (20n) enthält, angeordnet in einer Seite an einer Richtung der Fahrzeugbreite, einen zweiten Seitenwandabschnitt (20p), angeordnet an der anderen Seite, und einen Bodenwandabschnitt (20f), der den ersten und zweiten Wandabschnitt (20n, 20p) verbindet, und eine Höhenabmessung (h1) von dem Bodenwandabschnitt (20f) zu dem ersten Seitenwandabschnitt (20n) kleiner als eine Höhenabmessung (h2) von dem Bodenwandabschnitt (20f) zu dem zweiten Seitenwandabschnitt (20p) ist.

11. Fahrzeug vom Grätschsitz- Typ nach einem der Ansprüche 1 bis 10, **dadurch gekennzeichnet, dass** der Hinterarm (17) einen ersten Armhauptkörper (17a) enthält, der auf einer Seite in einer Richtung der Breite des Fahrzeuges angeordnet ist und eine Hinterrad- Antriebswelle (18a) unterbringt, und einen zweiten Armhauptkörper (17b), der auf der anderen Seite in der Richtung der Breite des Fahrzeuges angeordnet ist, und der erste Seitenwandabschnitt (20n) auf der Seite des ersten Armhauptkörpers (17a) in der Richtung der Breite des Fahrzeuges angeordnet ist, und der zweite Seitenwandabschnitt (20p) auf der Seite des zweiten Armhauptkörpers (17b) in der Richtung der Breite des Fahrzeuges angeordnet ist.

12. Fahrzeug vom Grätschsitz- Typ nach Anspruch 11 **dadurch gekennzeichnet, dass** der erste Armhauptkörper (17a) und der zweite Armhauptkörper (17b) einen zylindrischen Körperaufbau mit einem im Wesentlichen rechtwinkligen Querschnitt haben, wobei eine Abmessung der Breite des ersten Armhauptkörpers (17a) größer als eine Abmessung der Breite des zweiten Armhauptkörpers (17b) ist.

13. Fahrzeug vom Grätschsitz- Typ nach einem der Ansprüche 10 bis 12, **dadurch gekennzeichnet, dass** der ausgesparte Abschnitt (20f) in der Richtung der Breite des Fahrzeuges von einer Mittellinie (A) in Richtung zu dem ersten Seitenwandabschnitt (20n) nur um eine bestimmte Abmessung (C) versetzt ist.

14. Fahrzeug vom Grätschsitz- Typ nach einem der Ansprüche 10 bis 13, **dadurch gekennzeichnet, dass** eine Abmessung des ersten Seitenwandabschnittes (20n) in der Richtung der Breite des Fahrzeuges kleiner als eine Abmessung des zweiten Seitenwandabschnittes (20p) in der Richtung der Breite des Fahrzeuges ist.

15. Fahrzeug vom Grätschsitz- Typ nach einem der Ansprüche 1 bis 14, **dadurch gekennzeichnet, dass** sich die Kisseneinheit (37) der hinteren Aufhängung (19) durch die Öffnung (17e) erstreckt.

## Revendications

1. Véhicule de type monté à califourchon, comprenant :
un châssis de véhicule (2) avec un réservoir de carburant (20) fixé à celui-ci ;
un moteur (8) raccordé à un système d'échappement (13) ayant une chambre de capacité (13b) ; et
un bras arrière basculable (17) avec une suspension arrière (19) configurée pour tamponner une charge appliquée au bras arrière (17), dans lequel au moins une partie de la suspension arrière (19), vue d'un côté du véhicule de type monté à califourchon, est disposée entre la chambre de capacité (13b) et le réservoir de carburant (20) de sorte qu'au moins une partie de la suspension arrière (19) chevauche le bras arrière (17),
la suspension arrière (19) comprend une unité de coussinet (37) configurée pour générer une force d'amortissement et le bras arrière (17) comprend une ouverture (17e) à travers laquelle s'étend la suspension arrière (19), et une portion de bossage de support (17g)
**caractérisé en ce que**
le réservoir de carburant (20) est disposé sous un siège principal (23a) et une extrémité inférieure d'une tige de piston (37c) de l'unité de coussinet (37) est raccordée à ladite portion de bossage de support (17g) qui est formée sous un bord arrière de ladite ouverture (17e).

2. Véhicule de type monté à califourchon selon la revendication 1, **caractérisé en ce que** le réservoir de carburant (20) est disposé au-dessus du bras arrière (17), et/ou la chambre de capacité (13b) est disposée sous le bras arrière (17).

3. Véhicule de type monté à califourchon selon la revendication 1 ou 2, **caractérisé en ce que** le bras arrière (17) est supporté avec faculté de basculement dans une direction de déplacement de véhicule vers l'arrière du moteur (8), ledit moteur (8) étant fixé au châssis de véhicule (2).

4. Véhicule de type monté à califourchon selon l'une des revendications 1 à 3, **caractérisé en ce que** le système d'échappement (13) comprend en outre un tuyau d'échappement (13a) qui est raccordé au moteur (8) et s'étend dans la direction de déplacement du véhicule vers l'arrière, et la chambre de capacité (13b) est raccordée au tuyau d'échappement (13a).

5. Véhicule de type monté à califourchon selon l'une des revendications 1 à 4, **caractérisé en ce que** l'unité de coussinet (37) est disposée entre la chambre de capacité (13b) et le réservoir de carburant (20) de sorte qu'au moins une partie de l'unité de coussinet (37) recouvre le bras arrière (17), vu du côté du véhicule de type monté à califourchon.

6. Véhicule de type monté à califourchon selon la revendication 5, **caractérisé en ce que** la suspension arrière (19) comprend un mécanisme de liaison (38) configuré pour modifier une charge appliquée à l'unité de coussinet (37) et le mécanisme de liaison (38) est situé entre le réservoir de carburant (20) et le bras arrière (17), vu du côté du véhicule de type monté à califourchon.

7. Véhicule de type monté à califourchon selon la revendication 5 ou 6, **caractérisé en ce que** l'unité de coussinet (37) est agencée de façon à croiser le bras arrière (17), vu du côté du véhicule de type monté à califourchon.

8. Véhicule de type monté à califourchon selon l'une des revendications 5 à 7, **caractérisé en ce que** l'unité de coussinet (37) est disposée dans un état incliné de sorte que la majeure partie de l'unité de coussinet (37) recouvre le bras arrière 17, vu du côté du véhicule de type monté à califourchon.

9. Véhicule de type monté à califourchon selon l'une des revendications 1 à 8, **caractérisé en ce qu'**une paroi inférieure (20e) du réservoir de carburant (20) est dotée d'une portion évidée (20f) qui est évidée vers le haut et une partie d'un mécanisme de liaison (38) de la suspension arrière (19) est située dans la portion évidée (20f).

10. Véhicule de type monté à califourchon selon la revendication 9, **caractérisé en ce que** la portion évidée (20f) comprend une première portion de paroi latérale (20n) située d'un côté dans le sens de la largeur du véhicule, une seconde portion de paroi latérale (20p) située de l'autre côté, et une portion de paroi inférieure (20f') qui relie les première et seconde portions de paroi latérale (20n, 20p), et une dimension de hauteur (h1) de la portion de paroi inférieure (20f') à la première portion de paroi latérale (20n) est plus petite qu'une dimension de hauteur (h2) de la portion de paroi inférieure (20f') à la seconde portion de paroi latérale (20p).

11. Véhicule de type monté à califourchon selon l'une des revendications 1 à 10, **caractérisé en ce que** le bras arrière (17) comprend un premier corps principal de bras (17a) qui est situé d'un côté dans le sens de la largeur du véhicule et loge un arbre d'entraînement de roue arrière (18a), et un second corps principal de bras (17b) qui est situé de l'autre côté dans le sens de la largeur du véhicule, et la première portion de paroi latérale (20n) est située du côté du premier corps principal de bras (17a) dans le sens de la largeur du véhicule et la seconde portion de paroi latérale (20p) est située du côté du second corps principal de bras (17b) dans le sens de la largeur du véhicule.

12. Véhicule de type monté à califourchon selon la revendication 11, **caractérisé en ce que** le premier corps principal de bras (17a) et le second corps principal de bras (17b) présentent une structure de corps cylindrique avec une coupe transversale sensiblement rectangulaire, dans lequel une dimension de largeur du premier corps principal de bras (17a) est plus grande qu'une dimension de largeur du second corps principal de bras (17b).

13. Véhicule de type monté à califourchon selon l'une des revendications 10 à 12, **caractérisé en ce que** la portion évidée (20f) dans le sens de la largeur du véhicule n'est décalée d'une ligne centrale (A) vers la première portion de paroi latérale (20n) que d'une certaine dimension (C).

14. Véhicule de type monté à califourchon selon l'une des revendications 10 à 13, **caractérisé en ce qu'**une dimension de la première portion de paroi latérale (20n) dans le sens de la largeur du véhicule est plus petite qu'une dimension de la seconde portion de paroi latérale (20p) dans le sens de la largeur du véhicule.

15. Véhicule de type monté à califourchon selon l'une des revendications 1 à 14, **caractérisé en ce que** l'unité de coussinet (37) de la suspension arrière (19) s'étend à travers l'ouverture (17e).
